# EUROPÄISCHE PATENTSCHRIFT

(11) **EP 2 731 443 B1**
(45) Veröffentlichungstag und Bekanntmachung des Hinweises auf die Patenterteilung: **28.10.2020**
(21) Anmeldenummer: 12732645.2
(22) Anmeldetag: 03.07.2012
(51) Int. Cl.: A22C 21/00

(54) **VORRICHTUNG UND VERFAHREN ZUM ABTRENNEN DES GABELBEINS VON ENTWEIDETEN GEFLÜGELKÖRPERN**
DEVICE AND METHOD FOR SEPARATING THE WISHBONE OF EVISCERATED POULTRY CARCASSES
DISPOSITIF ET PROCÉDÉ POUR SÉPARER LA FOURCHETTE DES CARCASSES DE VOILAILLES

(30) Priorität: 11.07.2011 DE 102011107067
(43) Veröffentlichungstag der Anmeldung: 21.05.2014
(73) Patentinhaber: Nordischer Maschinenbau Rud. Baader GmbH + Co. KG, 23560 Lübeck (DE)
(72) Erfinder: LANDT, Andreas, 23554 Lübeck (DE)
(74) Vertreter: Stork Bamberger Patentanwälte PartmbB
(86) Internationale Anmeldenummer: PCT/EP2012/062934
(87) Internationale Veröffentlichungsnummer: WO 2013/007559

(56) Entgegenhaltungen:
- EP-A1- 0 336 162
- EP-A1- 0 709 032
- EP-A2- 2 289 340
- WO-A2-2011/068402
- DE-T2-602004 006 451

## Beschreibung

Die Erfindung betrifft eine Vorrichtung zum automatischen Abtrennen des Gabelbeins von entweideten Geflügelkörpern, umfassend einen umlaufenden Förderer mit mindestens einer Haltevorrichtung mit einem Stützkörper zum Aufnehmen und Halten der Geflügelkörper während des Transports durch die Vorrichtung, sowie mindestens eine Bearbeitungsstation entlang einer Förderstrecke des Förderers, wobei eine der Bearbeitungsstationen als Schneideinheit zum Abtrennen des Gabelbeins vom Geflügelkörper ausgebildet ist.

Die Erfindung betrifft des Weiteren ein Verfahren zum automatischen Abtrennen des Gabelbeins von entweideten Geflügelkörpern mittels eines Schneidmittels, wobei jeder Geflügelkörper von einer Haltevorrichtung eines umlaufenden Förderers gehalten wird, wobei der Förderer die Haltevorrichtungen in einer Transportrichtung entlang mindestens einer Bearbeitungsstation transportiert, mittels der das Gabelbein von dem Geflügelkörper getrennt wird.

Solche Vorrichtungen und Verfahren zum automatischen Abtrennen des Gabelbeins von entweideten Geflügelkörpern sind aus dem Stand der Technik bekannt. Der umlaufende Förderer mit der mindestens einen Haltevorrichtung ist üblicherweise ein Bestandteil einer Anlage zur Be- und Verarbeitung von Tierkörpern beziehungsweise Tierkörperteilen und kommt insbesondere in der Geflügelverarbeitung zum Einsatz. Dabei werden die entweideten Geflügelkörper als Bearbeitungsgut oftmals in einem sogenannten Beschickungsbereich auf eine der zuvor genannten Haltevorrichtungen beziehungsweise genauer auf eine der genannten Stützkörper der Haltevorrichtungen aufgesetzt. Mehrere solche Haltevorrichtungen sind besonders bevorzugt dem genannten umlaufenden Förderer zugeordnet. Der Förderer dient dazu, die Haltevorrichtungen und damit die entweideten Geflügelkörper von Bearbeitungsstation zu Bearbeitungsstation zu transportieren. Eine dieser Bearbeitungsstationen ist die zum Abtrennen des Gabelbeins vom Geflügelkörper ausgebildete Schneideinheit. Entlang der Schneideinheit ist die Haltevorrichtung bevorzugt in der Weise ausgerichtet, dass das Brustbein des Geflügelkörpers nach unten beziehungsweise in Richtung Boden und der Hals des Geflügelkörpers in Förderrichtung des Förderers zeigt.

Aus der Patentschrift DE 60 2004 006 451 T2 ist ein System zum automatischen Abtrennen des Gabelbeins von entweideten Geflügelkörpern bekannt. Um während der automatischen Abtrennung des Gabelbeins ein Zerbrechen des Gabelbeins oder eine Verunreinigung des Filets durch Knochensplitter zu vermeiden, werden in diesem Dokument eine Vorrichtung und ein Verfahren vorgestellt. Danach wird das Gabelbein aus dem Schultergelenk heraus gedreht. Eine dazu entsprechend angepasste Bearbeitungsstation umfasst dazu einen Einstecher und eine Trennklinge. Zum Abtrennen des Gabelbeins wird der Einstecher zunächst von oben zwischen den Schultergelenken und dem Gabelbein in das Geflügel eingeführt. Danach wird der Einstecher von der Haltevorrichtung des Geflügelkörpers weg bewegt, wodurch ein gewisser Druck auf das Gabelbein ausgeübt wird. Die Verschiebung des Einstechers führt somit zu einer entsprechenden Verschiebung des Gabelbeins. Nach dem Verschieben des Einstechers bewegt sich eine Trennklinge, die zuvor an der Brustseite des Geflügelkörpers angeordnet wurde, in einer Vertikalebene zum Geflügelkörper hin und her, so dass die Trennklinge den Geflügelkörper unterhalb des Gabelbeins und unterhalb einer untersten Stellung des Einstechers zerschneidet.

Derartige bekannte Vorrichtungen und Verfahren zum automatischen Abtrennen des Gabelbeins von entweideten Geflügelkörpern weisen also den Nachteil auf, dass eine Vielzahl von Bearbeitungsschritten notwendig ist, um das Gabelbein zerstörungsfrei von dem entweideten Geflügelkörper zu trennen. Der mit der Vielzahl der notwendigen Bearbeitungsschritte einhergehende Aufwand verursacht im praktischen Einsatz entsprechend hohe Kosten und begrenzt zudem vielfach auch die Transportgeschwindigkeit des Förderers. Außerdem sind die bekannten Verfahren und Vorrichtungen durch die Mehrzahl der in den Geflügelkörper eingreifenden Elemente zum Trennen des Gabelbeins von dem entweideten Geflügelkörper auf eine aufwendige Steuerung und/oder Regelung angewiesen, um die Bewegungsabläufe der mehreren in den Geflügelkörper eingreifenden Elemente aufeinander abgestimmt zu kontrollieren. Aufgrund des hohen maschinellen Aufwands und des entsprechend hohen Steuerungs- und/oder Regelungsaufwands sind die bekannten Vorrichtungen auch in ihrer maximalen Bearbeitungsgeschwindigkeit begrenzt.

Es ist deshalb die Aufgabe der vorliegenden Erfindung, eine möglichst einfache und kostengünstige Vorrichtung und ein entsprechendes Verfahren zum vollständigen und zerstörungsfreien Heraustrennen des Gabelbeins aus der Karkasse eines entweideten Geflügelkörpers zu schaffen.

Die Aufgabe wird durch eine Vorrichtung der eingangs genannten Art dadurch gelöst, dass die Schneideinheit einen Rotationsantrieb, ein Schneidmittel und einen das Schneidmittel und den Rotationsantrieb verbindenden Dreharm aufweist, der eingerichtet ist, das Schneidmittel in Rotationsrichtung entlang einer Kurvenbahn zu führen, wobei der Dreharm und das Schneidmittel eine zumindest im Wesentlichen L-förmige Anordnung bilden und das Schneidmittel eine von einer Ausnehmung unterbrochene Hauptschneide aufweist, die zumindest im Wesentlichen parallel zu der Drehachse des Dreharms ausgerichtet ist. Insbesondere durch die L-förmige Anordnung und die Ausnehmung wird auf einfache und zuverlässige Weise sichergestellt, dass das Schneidmittel beziehungsweise die Hauptschneide entlang einer Kurvenbahn durch den entweideten Geflügelkörper geführt werden kann, um das Gabelbein vollständig aus dem Geflügelkörper herauszutrennen, ohne das Gabelbein zu zerstören oder andere Fleischprodukte mit Knochensplittern des Gabelbeins zu verunreinigen. Denn die L-förmige Anordnung und die Ausnehmung des Schneidmittels sorgen dafür, dass die Hauptschneide und der tiefste Punkt der Ausnehmung unterschiedliche Radien zu der Drehachse des Dreharms aufweisen. Einem möglichen Hindernis auf einer Kurvenbahn der Hauptschneide, das nicht von der Hauptschneide durchschnitten oder aber nicht mit der Hauptschneide kollidieren soll, kann mittels der Ausnehmung "ausgewichen" werden. Aufgrund der zuvor genannten, voneinander abweichenden Radien kann die Hauptschneide seitlich an dem Hindernis vorbei schneiden, wohingegen die Ausnehmung über das entsprechende Hindernis hinweggeführt wird. Dadurch ist es erfindungsgemäß möglich, dass die Hauptschneide zumindest im Wesentlichen parallel zu der Drehachse des Dreharms ausgerichtet ist. Diese Parallelität bleibt auch erhalten, wenn das Schneidmittel entlang der Kurvenbahn geführt wird. Damit kann das Schneidmittel beziehungsweise die Hauptschneide symmetrisch in den Geflügelkörper eindringen, während die durch einen entsprechenden Schnitt verursachten Kräfte ebenfalls zumindest im Wesentlichen symmetrisch auf das Gabelbein wirken. Dank dieser vorgenannten Ausrichtung und der damit verbundenen Wirkungen kann das Gabelbein zerstörungsfrei aus dem Geflügelkörper herausgetrennt werden. Außerdem lässt sich die Bearbeitungsgeschwindigkeit der erfindungsgemäßen Vorrichtung aufgrund des überraschend einfachen Bewegungsablaufs, der mittels der erfindungsgemäßen Vorrichtung ausführbar ist, gegenüber bekannten Vorrichtungen zum automatischen Abtrennen des Gabelbeins von entweideten Geflügelkörpern deutlich erhöhen.

Eine vorteilhafte Ausgestaltung der erfindungsgemäßen Vorrichtung zeichnet sich dadurch aus, dass die Haltevorrichtung eine Klemmvorrichtung mit mindestens einem gegen den Stützkörper bewegbaren Klemmhebel zum Fixieren des Geflügelkörpers auf dem Stützkörper aufweist. Damit kann eine sichere und zuverlässige Halterung während des Transports sowie während der Bearbeitung des Geflügelkörpers in einer der Bearbeitungsstationen sichergestellt werden. Die Fixierung des Geflügelkörpers wird dabei durch die Klemmvorrichtung, die Bestandteil der Haltevorrichtung ist, erreicht. In diesem Zusammenhang bedeutet "gegen den Stützkörper" nicht zwangsläufig, dass ein direkter Kontakt zwischen dem Klemmhebel und dem Stützkörper besteht. Vielmehr kommt es darauf an, dass der Klemmhebel derart in Richtung des Stützkörpers bewegbar ist, dass der Geflügelkörper, am Beispiel eines Huhnes, das Brustbein beziehungsweise die Brustbeinplatte desselben, zwischen dem Klemmhebel und dem Stützkörper eingeklemmt und somit fixiert ist. Dazu kann der Klemmhebel in einer Klemmposition in den Bereich zwischen dem Gabelbein, dem Rabenbein und dem Brustbein des Geflügelkörpers fassend ausgebildet sein. Durch die erfindungsgemäße Fixierung des Geflügelkörpers kann ein Schnitt durch den Geflügelkörper zum Abtrennen des Gabelbeins noch präziser erfolgen. Durch eine entsprechend gesteigerte Präzision steigt die Sicherheit eines zerstörungsfreien Heraustrennens des Gabelbeins aus dem Geflügelkörper.

Eine weitere vorteilhafte Ausgestaltung der Vorrichtung zeichnet sich dadurch aus, dass die Hauptschneide horizontal und senkrecht zu einer Transportrichtung der Haltevorrichtung ausgerichtet ist. Das Gabelbein eines Geflügelkörpers, das in einer liegenden Position entlang der Schneideinheit transportiert wird, kann mittels einer entsprechend ausgerichteten Hauptschneide besonders einfach und zerstörungsfrei aus dem Geflügelkörper herausgetrennt werden. Denn durch die entsprechende Ausrichtung der Hauptschneide wird auf besonders einfache und zuverlässige Weise sichergestellt, dass die Hauptschneide symmetrisch in den Geflügelkörper beziehungsweise unter das Gabelbein eintauchen kann und deshalb auch eine vorteilhafte symmetrische Kraftverteilung durch den Schnitt auf den Geflügelkörper beziehungsweise auf das Gabelbein bedingt. Die Gefahr eines Gabelbeinbruchs ist durch die entsprechende Ausrichtung der Hauptschneide deutlich reduziert.

Eine weitere vorteilhafte Ausgestaltung der Vorrichtung zeichnet sich dadurch aus, dass das Schneidmittel, der Dreharm und der Rotationsantrieb in der Weise zu dem Förderer ausgerichtet sind, dass der Klemmhebel und/oder die Kammspitze des Brustbeins des Geflügelkörpers durch die Ausnehmung führbar und/oder dass die Hauptschneide beidseitig an der Kammspitze und/oder an dem Klemmhebel vorbeiführbar ist. Mit anderen Worten kann durch eine entsprechende Ausrichtung der Schneidmittel, des Dreharms und/oder des Rotationsantriebs verhindert werden, dass die Hauptschneide mit der Kammspitze und/oder mit dem Klemmhebel kollidiert. Bereits zuvor wurde erläutert, dass der Grund der Ausnehmung beziehungsweise die tiefste Stelle der Ausnehmung und die Hauptschneide unterschiedliche Radien zu der Drehachse des Dreharms aufweisen können. Gegenstände entlang der Kurvenbahn, die mit einer gedachten durchgängigen Hauptschneide kollidieren würden, werden von der erfindungsgemäßen Ausnehmung kollisionsfrei überfahren. Entsprechende Hindernisse für die Hauptschneide können beispielsweise der Klemmhebel und/oder die Kammspitze des Brustbeins sein. Die zuletzt genannte vorteilhafte Ausgestaltung der Vorrichtung zeichnet sich somit auch dadurch aus, dass die Ausnehmung über den Klemmhebel und/oder die Kammspitze des Brustbeins kollisionsfrei hinweg führbar ist, während die Hauptschneide beidseitig an der Kammspitze beziehungsweise an dem Klemmhebel kollisionsfrei vorbei führbar ist. Das Gabelbein des Geflügelkörpers kann somit besonders einfach, vollständig und zerstörungsfrei aus dem Geflügelkörper herausgetrennt werden.

Eine besonders vorteilhafte Ausgestaltung der Vorrichtung zeichnet sich dadurch aus, dass die Breite der Ausnehmung größer als die größte Breite des Klemmhebels und/oder der Kammspitze des Brustbeins ist. Damit wird auf einfache und zuverlässige Weise sichergestellt, dass die Hauptschneide kollisionsfrei an dem Klemmhebel und/oder an der Kammspitze beidseitig vorbei führbar ist.

Eine weitere vorteilhafte Ausgestaltung der Vorrichtung zeichnet sich dadurch aus, dass das Schneidmittel einstückig ausgebildet ist. Eine entsprechende Ausgestaltung lässt sich besonders einfach und kostengünstig herstellen. Außerdem wird mit einer entsprechenden Ausgestaltung auf einfache und zuverlässige Weise sichergestellt, dass das Schneidmittel das Gabelbein symmetrisch aus dem Geflügelkörper heraustrennt, denn ein einstückiges Schneidmittel kann eine besonders hohe Steifigkeit und/oder Formstabilität aufweisen.

Eine weitere vorteilhafte Ausgestaltung der Vorrichtung zeichnet sich dadurch aus, dass das Schneidmittel in einem Winkel zwischen 80° und 135°, besonders bevorzugt in einem Winkel zwischen 80° und 100°, oder beispielsweise in einem Winkel von zumindest im Wesentlichen 90°, zu einer Längsachse des Dreharms angeordnet ist. Die L-förmige Anordnung des Schneidmittels und des Dreharms zueinander ist also bevorzugt nicht auf einen Winkel von exakt 90° begrenzt, sondern kann in dem zuvor genannten Winkelbereich angeordnet sein. Darüber hinaus sind auch Winkel, die 135° oder mehr aufweisen, möglich und denkbar. Bei dem zu wählenden Winkel kommt es entscheidend darauf an, dass ein radialer Abstand zwischen der tiefsten Kante der Ausnehmung und der Drehachse des Dreharms geringer ist als der radiale Abstand der Hauptschneide zu der Drehachse des Dreharms. Um die Differenz zwischen den Radien zu erhöhen, kann der zuvor genannte Winkel erhöht werden. Alternativ ist es auch möglich, dass die Tiefe der Ausnehmung erhöht wird. Durch eine entsprechende konstruktive Anpassung lassen sich somit beliebige Hindernisse von der Ausnehmung überfahren, ohne dass es zu einer Kollision mit der Hauptschneide kommt.

Eine weitere vorteilhafte Ausgestaltung der Vorrichtung zeichnet sich dadurch aus, dass am Grunde der Ausnehmung oder an der tiefsten Kante der Ausnehmung eine zumindest im Wesentlichen parallel zur Hauptschneide ausgerichtete Hilfsschneide angeordnet und/oder ausgebildet ist. Der aufgrund der Ausnehmung der Hauptschneide nicht erfasste Bereich des Geflügelkörpers kann somit mittels der Hilfsschneide geschnitten werden. Damit wird auf einfache und zuverlässige Weise sichergestellt, dass das Gabelbein vollständig von dem Geflügelkörper getrennt werden kann.

Vorteilhafterweise weist das Schneidmittel ausgehend von der Hauptschneide und sich in Richtung des Dreharms erstreckend mindestens eine Führungsfläche auf. Die Führungsfläche dient zum Führen des bereits mittels der Hauptschneide abgetrennten Teils des Gabelbeins und/oder des abgetrennten Fleisches. Aufgrund der Formstabilität des Gabelbeins und/oder des inneren Zusammenhaltes des Fleisches wird auch das Gabelbein und/oder das Fleisch im Bereich der Ausnehmung entsprechend zu dem Teil des bereits abgetrennten Gabelbeins und/oder Fleisches mitgeführt. Das gilt insbesondere auch für eine zweckmäßige Weiterbildung der Vorrichtung, die sich dadurch auszeichnet, dass ein radialer Abstand der Hauptschneide von der Drehachse des Dreharms größer ist als der radiale Abstand der Hilfsschneide von der Drehachse des Dreharms. Denn mittels der Führungsfläche können die durch die Hauptschneiden hervorgerufenen, an die Ausnehmung angrenzenden Schnittkanten in dem Geflügelkörper zu der Hilfsschneide geführt werden. Dank der Hilfsschneide kann somit der durch die Hauptschneide unterbrochene Schnitt in dem Geflügelkörper in der Weise vervollständigt werden, dass es zu einem stetigen und/oder unterbrechungsfreien Schnitt kommt.

Die eingangs genannte Aufgabe wird außerdem durch ein Verfahren mit den eingangs genannten Merkmalen dadurch gelöst, dass ein mit einem Rotationsantrieb verbundener Dreharm das an dem Ende des Dreharms befestigte Schneidmittel entlang einer Kurvenbahn führt, wobei der Dreharm und das Schneidmittel eine zumindest im Wesentlichen L-förmige Anordnung bilden und das Schneidmittel eine von einer Ausnehmung unterbrochene Hauptschneide aufweist, die zumindest im Wesentlichen parallel zu der Drehachse des Dreharms ausgerichtet ist und in den Geflügelkörper eintaucht, und dass das Schneidmittel danach das Gabelbein in einer einzigen ununterbrochenen Schnittbewegung von dem Geflügelkörper abtrennt. Dank der erfindungsgemäßen Ausrichtung der Hauptschneide und der Führung des Schneidmittels entlang der Kurvenbahn ist es auf besonders einfache und kostengünstige Weise möglich, das Gabelbein vollständig und zerstörungsfrei in einer einzigen und unterbrechungsfreien Schnittbewegung von dem Geflügelkörper abzutrennen. Des Weiteren können mittels des erfindungsgemäßen Verfahrens die zu der erfindungsgemäßen Vorrichtung korrespondierenden Vorteile erreicht werden.

Eine vorteilhafte Ausgestaltung des Verfahrens zeichnet sich dadurch aus, dass eine die Hauptschneide unterbrechende Ausnehmung über die Kammspitze des Brustbeins des Geflügelkörpers und/oder über einen Klemmhebel der Haltevorrichtung zum Fixieren des Geflügelkörpers geführt wird, so dass die Kammspitze und/oder der Klemmhebel zumindest teilweise durch die Ausnehmung hindurch tauchen. Damit ist es auf besonders einfache und zuverlässige Weise sichergestellt, dass das Gabelbein in einer einzigen ununterbrochenen Schnittbewegung von dem Geflügelkörper abgetrennt werden kann. Mit anderen Worten kann auf die zuvor genannte Weise eine Kollision mit unerwünschten Elementen der Karkasse des Geflügelkörpers und/oder Elementen der Haltevorrichtung einfach und effizient vermieden werden.

Eine vorteilhafte Ausgestaltung des Verfahrens zeichnet sich dadurch aus, dass die Hauptschneide in einer einzigen ununterbrochenen Schnittbewegung beidseitig an der Kammspitze und/oder an dem Klemmhebel vorbei geführt wird. Auch hiermit kann auf effektive und sichere Weise gewährleistet werden, dass die Hauptschneide nicht mit Elementen der Karkasse des Geflügelkörpers und/oder der Haltevorrichtung kollidiert und somit in einer besonders einfachen und kostengünstigen Weise das Gabelbein vollständig und zerstörungsfrei aus dem Geflügelkörper trennen kann. Zudem gelten auch die zu der vorangegangenen Ausgestaltung genannten Vorteile.

Eine weitere vorteilhafte Ausgestaltung des Verfahrens zeichnet sich dadurch aus, dass das Schneidmittel entlang einer Kurvenbahn geführt wird, die zwischen der Kammspitze des Brustbeins und dem gegenüber liegenden Ende des Gabelbeins und/oder durch den Verbindungsbereich zwischen den Rabenbeinen des Geflügelkörpers und den entsprechenden Endes des Gabelbeins führt. Geflügelkörper weisen vielfach zwischen der Kammspitze des Brustbeins und dem gegenüber liegenden Ende des Gabelbeins eine Sehne auf. Mit anderen Worten besteht zwischen der Kammspitze des Brustbeins und dem gegenüber liegenden Ende des Gabelbeins ein knochenfreier Bereich. Das erfindungsgemäße Schneidmittel, das entlang der vorgenannten Kurvenbahn durch den zuletzt genannten Bereich zwischen der Kammspitze des Brustbeins und dem gegenüber liegenden Ende des Gabelbeins geführt wird, führt somit weder zu einer Kollision mit dem Gabelbein noch zu einer Kollision mit der Kammspitze des Brustbeins. Die Rabenbeine und die entsprechenden Enden des Gabelbeins sind für gewöhnlich durch Knorpel miteinander verbunden. Ein Schneidmittel, das entlang der Kurvenbahn durch diesen Verbindungsbereich zwischen dem Rabenbein und den entsprechenden Enden des Gabelbeins führt, verhindert deshalb auch eine Zerstörung des abzutrennenden Gabelbeins.

Eine weitere vorteilhafte Ausgestaltung des Verfahrens zeichnet sich dadurch aus, dass die Hauptschneide den Verbindungsbereich zwischen den Rabenbeinen und den entsprechenden Enden des Gabelbeins durchschneidet. Somit kommt es weder zu einem Herausdrehen noch zu einem Herausbrechen des Gabelbeins aus dem Geflügelkörper. Mit anderen Worten gewährleistet diese Ausgestaltung das zerstörungsfreie Heraustrennen des Gabelbeins aus dem Geflügelkörper.

Eine vorteilhafte Ausgestaltung des Verfahrens zeichnet sich dadurch aus, dass eine Hilfsschneide der Ausnehmung den Geflügelkörper zwischen der Kammspitze des Brustbeins und dem gegenüber liegenden Ende des Gabelbeins durchschneidet. Hierbei wird bevorzugt auch die zuvor genannte Sehne zwischen der Kammspitze des Brustbeins und dem gegenüber liegenden Ende des Gabelbeins durchtrennt. Durch diese vorteilhafte Ausgestaltung kann die Hilfsschneide das dem Brustbein zugewandte Ende des Gabelbeins von dem Geflügelkörper trennen. Damit gewährleistet auch diese Ausgestaltung einen Beitrag zur zerstörungsfreien und vollständigen Trennung des Gabelbeins von dem Geflügelkörper.

Eine vorteilhafte Ausgestaltung des Verfahrens zeichnet sich dadurch aus, dass ein Einschnitt und/oder eine Schnittgeschwindigkeit des Schneidmittels zu der Transportgeschwindigkeit des Förderers synchronisiert werden. Damit kann auf einfache und zuverlässige Weise sichergestellt werden, dass das Schneidmittel und/oder die Schneiden des Schneidmittels nicht mit dem Gabelbein des Geflügelkörpers kollidieren, so dass das Gabelbein vollständig und zerstörungsfrei aus dem Geflügelkörper herausgetrennt werden kann.

Weitere vorteilhafte und/oder zweckmäßige Merkmale und Ausgestaltungen ergeben sich aus den Unteransprüchen sowie der Beschreibung. Eine besonders bevorzugte Ausführungsform wird anhand der beigefügten Zeichnungen näher erläutert. In den Zeichnungen zeigen:
- Fig. 1: eine schematische Darstellung einer Karkasse eines Geflügelkörpers,
- Fig. 2: eine Seitenansicht der erfindungsgemäßen Vorrichtung,
- Fig. 3: eine Schnittdarstellung der erfindungsgemäßen Vorrichtung und
- Fig. 4: eine Draufsicht auf das erfindungsgemäße Schneidmittel.

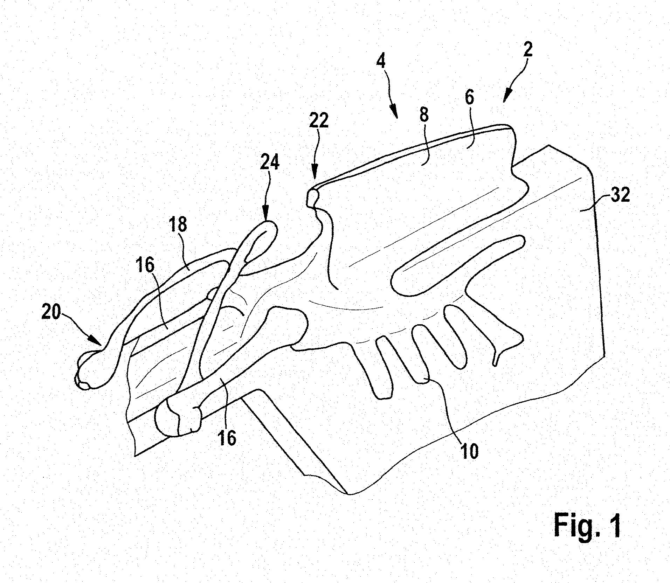

In Fig. 1 ist das Knochengerüst einer Karkasse 2 eines Geflügelkörpers 4 dargestellt. Auch wenn in Fig. 1 die unterschiedlichen Fleischgruppen eines Geflügelkörpers nicht dargestellt sind, sind diese Fleischgruppen natürlich in der Realität mit den entsprechenden Knochen der Karkasse 2 des Geflügelkörpers 4 verbunden. Die Karkasse 2 weist auf der Brustseite ein Brustbein 6 auf, wobei dessen Kamm 8 von der Karkasse weg orientiert ausgerichtet ist. Außerdem weist die Geflügelkarkasse 2 mehrere Rippen 10, zwei Rabenbeine 16 und ein Gabelbein 18 auf. In den Verbindungsbereichen 20 ist jedes der Rabenbeine 16 mit dem Gabelbein 18 verbunden. Diese Verbindung beruht primär auf einer Knorpelverbindung. Außerdem sind die Kammspitze 22 und das gegenüber liegende Ende 24 des Gabelbeins 18 zumeist durch eine Sehne miteinander verbunden. Außerdem zeigt Fig. 1 einen Stützkörper 32 einer Haltevorrichtung zum Aufnehmen und Haltes des Geflügelkörpers 4.

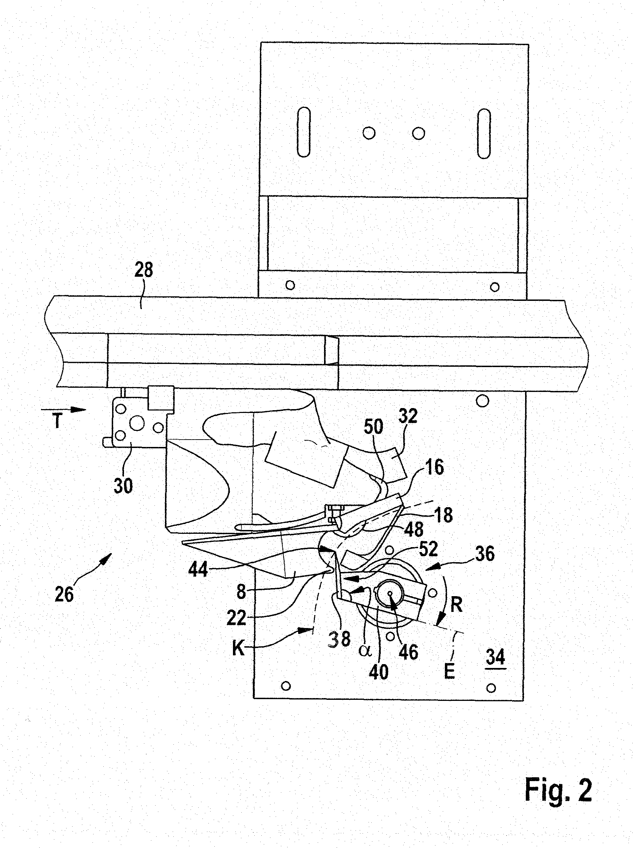

In Fig. 2 ist die erfindungsgemäße Vorrichtung 26 zum automatischen Abtrennen des Gabelbeins 18 von entweideten Geflügelkörpern 4 dargestellt. Die Vorrichtung 26 umfasst einen umlaufenden Förderer 28 mit mindestens einer Haltevorrichtung 30 mit einem Stützkörper 32 zum Aufnehmen und Haltes des Geflügelkörpers 4 während des Transports durch die Vorrichtung 26. Außerdem weist die Vorrichtung 26 mindestens eine Bearbeitungsstation entlang einer Förderstrecke des Förderers 28 auf, wobei eine der Bearbeitungsstationen als Schneideinheit 34 zum Abtrennen des Gabelbeins 18 vom Geflügelkörper 4 ausgebildet ist. Die Schneideinheit 34 selbst weist einen Rotationsantrieb 36, ein Schneidmittel 38 und ein das Schneidmittel 38 und den Rotationsantrieb 36 verbindenden Dreharm 40 auf, der eingerichtet ist, das Schneidmittel 38 in Rotationsrichtung R entlang einer Kurvenbahn K zu führen. Der Dreharm 40 und das Schneidmittel 38 bilden dabei eine zumindest im Wesentlichen L-förmige Anordnung. Außerdem weist das Schneidmittel 38 eine von einer Ausnehmung 42 unterbrochene Hauptschneide 44 auf, die zumindest im Wesentlichen parallel zu einer Drehachse 46 des Dreharms 40 ausgerichtet ist.

Der umlaufende Förderer 28 mit der mindestens einen Haltevorrichtung 30 mit dem Stützkörper 32 zur Aufnahme und Haltung des Geflügelkörpers 4 ist aus dem Stand der Technik bekannt und wird vom Grundprinzip auch sehr ausführlich in der Patentschrift EP 0 401 528 B1 der Anmelderin beschrieben. Bezüglich dieser Merkmale und/oder des Grundprinzips wird auf deren Beschreibung an dieser Stelle verwiesen. Eine weitere Quelle für das Grundprinzip dieser Merkmale geht aus der Patentschrift DE 10 2006 040 454 hervor. Des Weiteren ist es aus dem Stand der Technik bekannt, dass eine Vorrichtung 26 zum automatischen Abtrennen des Gabelbeins 18 von dem entweideten Geflügelkörper 4 mindestens eine Bearbeitungsstation entlang einer Förderstrecke des Förderers 28 aufweist. Solche Bearbeitungsstationen können neben der erfindungsgemäßen Schneideinheit 34 beispielsweise auch eine Enthäutungseinheit, eine Filetierungseinheit, eine Schlüsselbeinentfernungseinheit und/oder andere notwendige Einheiten umfassen. Bevorzugt ist die erfindungsgemäße Schneideinheit 34 entlang der Förderstrecke des Förderers 28 hinter einer Filetierungseinheit angeordnet, die dazu ausgebildet ist, das Filet vom Geflügelkörper automatisch abzutrennen.

Bei dem erfindungsgemäßen Rotationsantrieb 36 der Schneideinheit 34 handelt es sich bevorzugt um einen Servomotorantrieb. Grundsätzlich sind als Rotationsantrieb 36 aber auch andere Antriebseinheiten möglich, die überlagert zu einer Rotationsbewegung auch eine translatorische Bewegung ausführen können, um das Schneidmittel 38 in Rotationsrichtung R entlang einer beliebigen Kurvenbahn K zu führen. Dazu kann der Vorrichtung 26 eine Steuerungs- und/oder Regelungseinheit zugeordnet sein, die den Rotationsantrieb 36 in der Weise steuert und/oder regelt, dass das Schneidmittel 38 eine vorgegebene und/oder vorgebbare Kurvenbahn K fährt. Bei der Kurvenbahn K kann es sich deshalb um eine kreisförmige, oder aber auch um eine ellipsenförmige oder parabelförmige Bahn handeln. Die Wahl der Kurvenbahn K kann dabei von den geometrischen Abmessungen des Gabelbeins 18 abhängen. In einer vorteilhaften Ausgestaltung wird die Kurvenbahn K durch die Länge des Gabelbeins 18 bestimmt. Denn um ein vollständiges und zerstörungsfreies Heraustrennen des Gabelbeins 18 aus der Karkasse 2 des Geflügelkörpers 4 zu schaffen, wird die Kurvenbahn K in einer vorteilhaften Ausbildung in der Weise durch den Geflügelkörper 4 gelegt, dass die erfindungsgemäße Hauptschneide 44 an dem Gabelbein 18 vorbei führt. Dazu weist das Schneidmittel 38 eine von einer Ausnehmung 42 (nicht dargestellt) unterbrochene Hauptschneide 44 auf, die zumindest im Wesentlichen parallel zu der Drehachse 46 des Dreharms 40 ausgerichtet ist. Damit kann die Hauptschneide 44 in den Bereich des Geflügelkörpers 4 zwischen den Rabenbeinen 16 und dem Gabelbein 18 eintauchen ohne mit dem Brustbeinkamm 8 oder mit dem Gabelbein 18 zu kollidieren. Damit auch die Ausnehmung 42 nicht mit dem Brustbeinkamm 8 oder mit dem Gabelbein 18 kollidiert, bilden der Dreharm 40 und das Schneidmittel 38 eine zumindest im Wesentlichen L-förmige Anordnung. Dank dieser Anordnung ist es möglich, dass ein radialer Abstand der Hauptschneide 44 von der Drehachse 46 des Dreharms 40 größer ist als der radiale Abstand der tiefsten Stelle beziehungsweise Kante der Ausnehmung 42 von der Drehachse 46 des Dreharms 40. Aufgrund dieser erfindungsgemäß ausgebildeten Schneideinheit 34 kann die Hauptschneide 44 kollisionsfrei an "Hindernissen" wie beispielsweise der Kammspitze 22 oder an einem Klemmhebel 48 einer Klemmvorrichtung 50 der Haltevorrichtung 30 vorbeigeführt werden.

Korrespondierend zu der erfindungsgemäßen Vorrichtung 26 betrifft die Erfindung auch ein Verfahren zum automatischen Abtrennen des Gabelbeins 18 von entweideten Geflügelkörpem 4 mittels eines Schneidmittels 38, wobei jeder Geflügelkörper 4 von einer Haltevorrichtung 30 eines umlaufenden Förderers 28 gehalten wird, wobei der Förderer die Haltevorrichtungen in einer Transportrichtung T entlang mindestens einer Bearbeitungsstation transportiert, in der das Gabelbein 18 von dem Geflügelkörper 4 getrennt wird, wobei ein mit einem Rotationsantrieb 36 verbundener Dreharm 40 das an dem Ende 52 des Dreharms 40 befestigte Schneidmittel 38 entlang einer Kurvenbahn K führt, wobei eine zumindest im Wesentlichen parallel zu der Drehachse 46 des Dreharms 40 ausgerichtete Hauptschneide 44 des Schneidmittels 38 in den Geflügelkörper 4 eintaucht und wobei das Schneidmittel 38 danach das Gabelbein 18 in einer einzigen ununterbrochenen Schnittbewegung von dem Geflügelkörper 4 abtrennt.

Damit schafft die vorliegende Erfindung eine besonders einfache und kostengünstige Vorrichtung sowie ein entsprechendes Verfahren zum vollständigen und zerstörungsfreien Heraustrennen des Gabelbeins 18 aus der Karkasse 2 eines entweideten Geflügelkörpers 4.

Damit das automatische Abtrennen des Gabelbeins 18 aus dem entweideten Geflügelkörpers 4 besonders präzise und mit einer wiederholbaren Güte ausführbar ist, kann die Haltevorrichtung 30 eine Klemmvorrichtung 50 mit mindestens einem gegen den Stützkörper 32 bewegbaren Klemmhebel 48 zum Fixieren des Geflügelkörpers 4 auf dem Stützkörper 32 aufweisen. Dazu kann der Klemmhebel 48 derart in Richtung des Stützkörpers 32 bewegt werden, dass das Brustbein 6 beziehungsweise eine Brustbeinplatte des Brustbeins 6 zwischen dem Klemmhebel 48 und dem Stützkörper 32 eingeklemmt und damit fixiert wird. In einer entsprechenden Klemmposition fasst der Klemmhebel 48 in den Bereich zwischen dem Gabelbein 18, den Rabenbeinen 16 und dem Brustbein 6.

Um einen Schnitt der Hauptschneide 44 kollisionsfrei und unterhalb des Gabelbeins 18 zu ermöglichen, ist die Hauptschneide 44 vorteilhafter Weise horizontal und senkrecht zu der Transportrichtung T der Haltevorrichtung 30 eingerichtet.

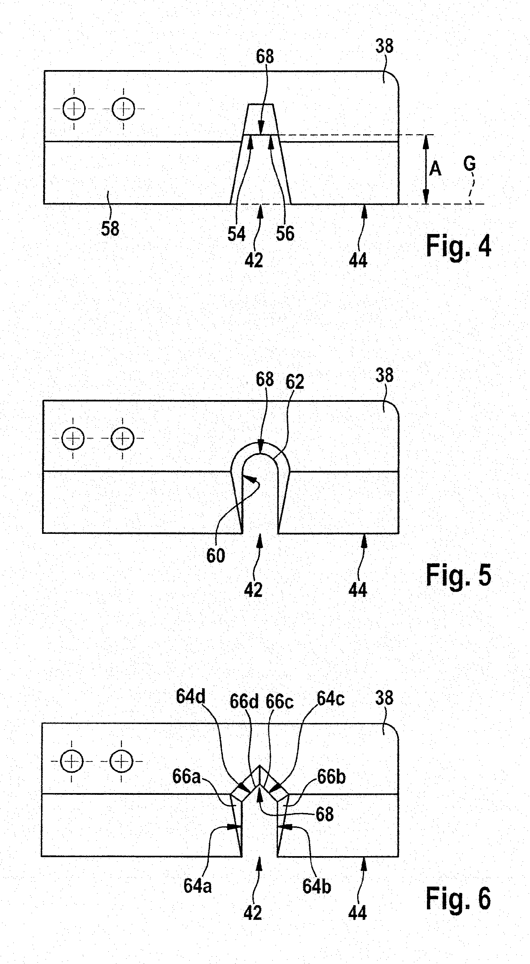

In einer weiteren vorteilhaften Ausgestaltung ist mindestens eine der Bearbeitungsstationen als Messstation ausgebildet. Auch ist es möglich, dass eine der Bearbeitungsstationen, insbesondere auch die Schneideinheit 34, Messmittel umfasst. Die Messstationen beziehungsweise die Messmittel sind zum Erfassen von spezifischen Daten (also beispielsweise der Größe, der Geometrie, der Länge, der Breite, der Höhe etc.) ausgebildet. Besonders eignen sich die beiden Schultergelenke des Geflügelkörpers 4 als Messpunkte, die in Transportrichtung T des Förderers 28 bevorzugt nach vorne gerichtet und durch vorteilhafte Messverfahren detektierbar sind. Mittels der erfassten spezifischen Daten und der Kenntnis der Transportrichtung T, Transportgeschwindigkeit und/oder anderen relevanten Daten des Förderers 28 kann die Ortsposition des Geflügelkörpers 4 zu jedem Zeitpunkt ermittelt werden. Eine vorteilhafte Ausgestaltung der Erfindung zeichnet sich deshalb dadurch aus, dass ein Einschnitt oder eine Schnittgeschwindigkeit des Schneidmittels 38 zu der Transportgeschwindigkeit des Förderers 28 und/oder zu einer Ortsposition des Geflügelkörpers 4 synchronisiert werden. Des Weiteren ist es möglich, dass die Geschwindigkeit des Schneidmittels in Abhängigkeit von der, insbesondere ermittelten, Länge des Gabelbeins 18 so verändert wird, dass die Kurvenbahn K zwischen der Kammspitze 22 des Brustbeins 6 und dem gegenüber liegenden Ende 24 des Gabelbeins 18 und/oder durch einen Verbindungsbereich 20 zwischen den Rabenbeinen 16 und den entsprechenden Ende des Gabelbeins führt. Vorteilhafter Weise sind das Schneidmittel 38, der Dreharm 40 und der Rotationsantrieb 36 in der Weise zu dem Förderer 28 ausgerichtet, dass der Klemmhebel 48 und/oder die Kammspitze 22 des Brustbeins 6 des Geflügelkörpers 4 durch die Ausnehmung 42 führbar und/oder dass die Hauptschneide 44 beidseitig an der Kammspitze 22 und/oder an dem Klemmhebel 48 vorbeiführbar ist. Eine entsprechende Ausgestaltung des Schneidmittels 38 ist in Fig. 4 dargestellt. Die Hauptschneide 44 ist von der Ausnehmung 42 unterbrochen. Die Tiefe A der Ausnehmung 42 kann an die "Hindernisse", also insbesondere der Klemmhebel 48 und/oder die Kammspitze 22, entlang der Kurvenbahn K des Schneidmittels 38 in der Weise angepasst sein, dass es zu keiner Kollision mit den "Hindernissen" kommt. Mit anderen Worten kann die Tiefe A der Ausnehmung 42 größer als der am weitesten durch die Kurvenbahn K hindurch ragende Punkt 54 des oder der Hindernisse sein. Unter Bezugnahme auf Fig. 2 kann die Tiefe A der Ausnehmung 42 also größer als die Distanz zwischen der Kammspitze 22 und der in diesem Bereich vorbeiführenden Kurvenbahn K sein. Somit ist es möglich, dass die Hauptschneide 44 in einer einzigen ununterbrochenen Schnittbewegung beidseitig an der Kammspitze 22 und/oder an dem Klemmhebel 48 vorbeigeführt wird. Außerdem ist es möglich, dass die die Hauptschneide 44 unterbrechende Ausnehmung 42 über die Kammspitze 22 des Brustbein 6 des Geflügelkörpers 4 und/oder über den Klemmhebel 48 der Haltevorrichtung 30 geführt wird, so dass die Kammspitze 22 und/oder der Klemmhebel 48 zumindest teilweise durch die Ausnehmung hindurch tauchen. Mit einem teilweisen Durchtauchen ist in diesem Zusammenhang gemeint, dass nicht der gesamte Hebel, sondern beispielsweise nur der von der Kurvenbahn "geschnittene" Teil des Klemmhebels 48 durch die Ausnehmung 42 hindurch taucht.

Eine vorteilhafte Ausgestaltung der Erfindung zeichnet sich dadurch aus, dass das Schneidmittel 38 in einem Winkel α zwischen 80° und 135° zu der Längsachse E des Dreharms 40 angeordnet ist. Dies ist ein bevorzugter Winkelbereich, der eine im Wesentlichen L-förmige Anordnung zwischen dem Dreharm 40 und dem Schneidmittel 38 bietet.

Eine besonders vorteilhafte Ausgestaltung des Schneidmittels 38 ist in Fig. 4 dargestellt, das sich dadurch auszeichnet, dass die Hauptschneide 44 eine gerade Schneide ist und/oder entlang einer gemeinsamen Gerade G ausgerichtet ist. Eine alternative Ausgestaltung des Schneidmittels 38 zeichnet sich dadurch aus, dass die Hauptschneide 44 eine, vorzugsweise symmetrisch, gebogene Schneide ist und/oder entlang einer gemeinsamen Kurve ausgerichtet ist. Auch ist es möglich, dass die Hauptschneide 44 eine, vorzugsweise symmetrisch, geknickte Schneide ist. Zusammenfassend kann durch jede der zuvor genannten Ausgestaltungen der Hauptschneide 44 auf besonders einfache und zuverlässige Weise sichergestellt werden, dass die Hauptschneide 44 symmetrisch in den Geflügelkörper 4 beziehungsweise unter das Gabelbein 18 eintauchen kann und deshalb auch eine vorteilhafte symmetrische Kraftverteilung durch den Schnitt auf den Geflügelkörper 4 beziehungsweise auf das Gabelbein 18 bedingt. Die Gefahr eines Gabelbeinbruchs ist durch die entsprechende Ausrichtung der Hauptschneide 44 deutlich reduziert.

Um eine besonders hohe Formstabilität des Schneidmittels 38 und damit einen besonders sicheren und präzisen Schnitt zu ermöglichen, ist das Schneidmittel 38 bevorzugt einstückig ausgebildet. Eine zweckmäßige Ausgestaltung des Schneidmittels 38 zeichnet sich dadurch aus, dass an der tiefsten Kante 54 der Ausnehmung 42 oder am Grunde der Ausnehmung 42 eine zumindest im Wesentlichen parallel zur Hauptschneide 44 ausgerichtete Hilfsschneide 56 ausgebildet ist.

Eine weitere vorteilhafte Ausgestaltung des Schneidmittels 38 ist in Fig. 5 dargestellt, das sich dadurch auszeichnet, dass das Schneidmittel 38 an der der Ausnehmung 42 zugewandten Kante 60 eine umlaufende Hilfsschneide 62 aufweist.

Eine weitere zweckmäßige Ausgestaltung des Schneidmittels 38 ist in Fig. 6 dargestellt, das sich dadurch auszeichnet, dass das Schneidmittel 38 an zwei einander und der Ausnehmung 42 zugewandten Kanten 64a, 64b jeweils eine Hilfsschneide 66a, 66b aufweist. Eine weitere zweckmäßige Ausgestaltung des Schneidmittels 38 zeichnet sich dadurch aus, dass das Schneidmittel 38 an mindestens einer der Ausnehmung 42 zugewandten Kante 64a, vorzugsweise an jeder der Ausnehmung zugewandten Kante 64a - 64d, eine Hilfsschneide 66a bzw. 66a-66d aufweist.

Im Bereich der Ausnehmung 42 erfolgt durch die Hauptschneide kein Schnitt in oder durch den Geflügelkörper 4. Dies kann jedoch durch die Hilfsschneide 56, 60 oder 64 nachgeholt werden. Denn bei einer Schnittbewegung des Schneidmittels 38 kann die Hilfsschneide 56, 60 oder 64 den Geflügelkörper 4 zeitlich versetzt zu der Hauptschneide 44 schneiden. Entsprechendes gilt auch für ein Eintauchen in den Geflügelkörper 4. Auch mit einer derartigen Ausgestaltung der Erfindung ist weiterhin ein vollständiges und zerstörungsfreies Heraustrennen des Gabelbeins 18 aus der Karkasse 2 des entweideten Geflügelkörpers 4 möglich. Denn ein radialer Abstand der Hauptschneide 44 von der Drehachse 46 des Dreharms 40 ist bevorzugt größer als der radiale Abstand der Hilfsschneide 56 oder dem tiefsten Punkt 68 der Hilfsschneide 60 oder 64 von der Drehachse 46 des Dreharms 40. Mit anderen Worten: Die L-förmige Anordnung, die Ausnehmung 42 und/oder die mindestens eine Hilfsschneide 56, 60 oder 64 können so ausgestaltet und/oder ausgebildet sein, dass ein radialer Abstand der Hauptschneide 44 von der Drehachse 46 des Dreharms 40 größer ist als der radiale Abstand des tiefsten Punktes 68 der Ausnehmung, des tiefsten Punktes 68 der einen Hilfsschneide 56 oder 60 und/oder des tiefsten Punktes 68 einer Anordnung aus mehreren Hilfsschneiden 66 von der Drehachse 46 des Dreharms 40.

Eine weitere vorteilhafte Ausgestaltung der Erfindung zeichnet sich dadurch aus, dass das Schneidmittel 38 ausgehend von der Hauptschneide 44 und sich in Richtung des Dreharms 40 und/oder der Hilfsschneide 56, 60 oder 64 erstreckend mindestens eine Führungsfläche 58 aufweist. Dadurch kann der von der Ausnehmung 42 der Hauptschneide 44 nicht geschnittene Teil des Geflügelkörpers 4 zu der Hilfsschneide 56 geführt werden. Hierbei können gleichermaßen die zu der Ausnehmung 42 gerichteten, durch die Hauptschneide 44 verursachten Schnittkanten in dem Geflügelkörper 4 zu der Hilfsschneide 56 geführt werden. Somit kann die Hilfsschneide 56, 60 oder 64 den Geflügelkörper 4 zwischen den zuvor genannten Schnittkanten schneiden beziehungsweise durchtrennen. Obwohl es sich hierbei um einen Zwei-Schritt-Schnitt handelt, ist das Ergebnis der Schnitte durch die Hauptschneide 44 und die Hilfsschneide 56, 60 oder 64 ein durchgängiger, stetiger und/oder einheitlicher Schnitt. Mit anderen Worten: Obwohl die Hauptschneide 44 und die Hilfsschneide 56, 60 oder 64 den Geflügelkörper 4 zu unterschiedlichen Zeitpunkten schneiden, kommt es nicht zu einem stufenartigen Schnitt in oder durch den Geflügelkörper. Vielmehr gleicht der Schnitt einem Schnitt, der beispielsweise durch eine ununterbrochene Schneide verursacht werden kann.

Bereits zuvor wurde erläutert, dass die erfindungsgemäße Schneideinheit 34 bevorzugt dazu eingerichtet und/oder ausgebildet ist, um an möglichen Hindernissen entlang einer Kurvenbahn K vorbeigeführt zu werden. Insbesondere unter Berücksichtigung der zuvor genannten Merkmale zeichnet sich eine vorteilhafte Ausgestaltung der Erfindung dadurch aus, dass die Hilfsschneide 56, 60 oder 64 der Ausnehmung 42 den Geflügelkörper 4 zwischen der Kammspitze 22 des Brustbeins 6 und dem gegenüber liegenden Ende 24 des Gabelbeins 18 durchschneidet. Hierbei kann insbesondere die entsprechende Sehne durchtrennt werden. Einen zweckmäßige Weiterentwicklung zeichnet sich dadurch aus, dass die Hauptschneide 44 den Verbindungsbereich 20 zwischen den Rabenbeinen 16 und den entsprechenden Enden des Gabelbeins durchschneidet. Zweckmäßigerweise kann das Schneidmittel 38 entlang der Kurvenbahn K geführt werden, die zwischen der Kammspitze 22 des Brustbeins 6 und dem gegenüber liegenden Ende 24 des Gabelbeins 18 und/oder durch den Verbindungsbereich 20 zwischen den Rabenbeinen 16 und den entsprechenden Enden des Gabelbeins 18 führt.

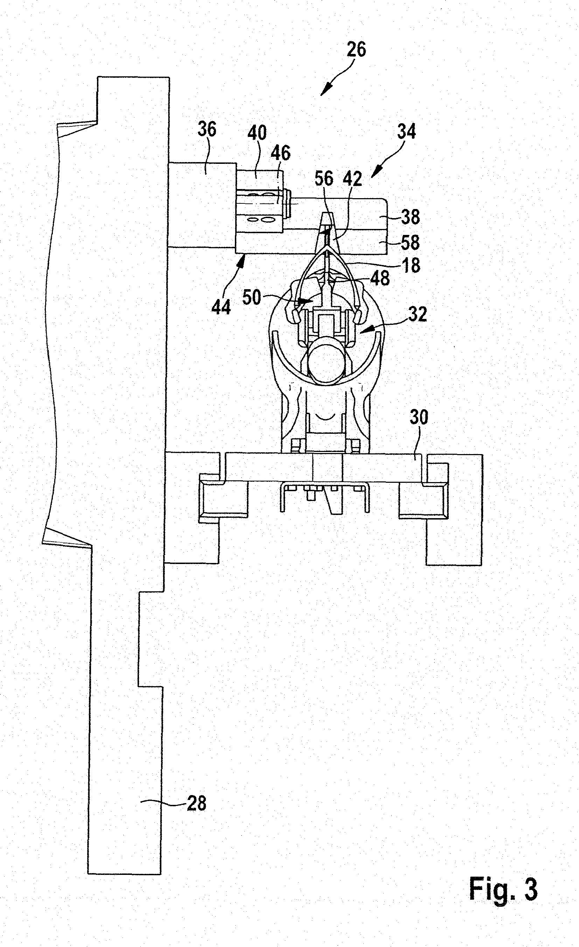

Entsprechend zu den voran gegangenen Erläuterungen zu der erfindungsgemäßen Vorrichtung beziehungsweise dem erfindungsgemäßen Verfahren und deren vorteilhaften Weiterentwicklungen ist in Fig. 3 eine Schnittdarstellung der erfindungsgemäßen Vorrichtung 26 dargestellt. Danach ist es von Vorteil, wenn die Ausnehmung 42, insbesondere entlang der Kurvenbahn K, mittig beziehungsweise axial mittig zu dem Klemmhebel 48 und/oder zu der Kammspitze 22 angeordnet ist.

## Patentansprüche

1. Vorrichtung zum automatischen Abtrennen des Gabelbeins (18) von entweideten Geflügelkörpern (4), umfassend einen umlaufenden Förderer (28) mit mindestens einer Haltevorrichtung (30) mit einem Stützkörper (32) zum Aufnehmen und Halten der Geflügelkörper (4) während des Transports durch die Vorrichtung (26), sowie mindestens eine Bearbeitungsstation entlang einer Förderstrecke des Förderers (28), wobei eine der Bearbeitungsstationen als Schneideinheit (34) zum Abtrennen des Gabelbeins (18) vom Geflügelkörper (4) ausgebildet ist, **dadurch gekennzeichnet, dass** die Schneideinheit (34) einen Rotationsantrieb (36), ein Schneidmittel (38) und einen das Schneidmittel (38) und den Rotationsantrieb (36) verbindenden Dreharm (40) aufweist, der eingerichtet ist, das Schneidmittel (38) in Rotationsrichtung (R) entlang einer Kurvenbahn (K) zu führen, wobei der Dreharm (40) und das Schneidmittel (38) eine zumindest im Wesentlichen L-förmige Anordnung bilden und das Schneidmittel (38) eine von einer Ausnehmung (42) unterbrochene Hauptschneide (44) aufweist, die zumindest im Wesentlichen parallel zu der Drehachse (46) des Dreharms (40) ausgerichtet ist.

2. Vorrichtung nach dem vorangehenden Anspruch, **dadurch gekennzeichnet, dass** die Haltevorrichtung (30) eine Klemmvorrichtung (50) mit mindestens einem gegen den Stützkörper (32) bewegbaren Klemmhebel (48) zum Fixieren des Geflügelkörpers (4) auf dem Stützkörper (32) aufweist.

3. Vorrichtung nach einem der vorhergehenden Ansprüche, **dadurch gekennzeichnet, dass** die Hauptschneide (44) horizontal und senkrecht zu einer Transportrichtung (T) der Haltevorrichtung (30) ausgerichtet ist.

4. Vorrichtung nach einem der vorhergehenden Ansprüche 2 oder 3, **dadurch gekennzeichnet, dass** der Klemmhebel (48) in einer Klemmposition in den Bereich zwischen dem Gabelbein (18), dem Rabenbein (16) und dem Brustbein (6) des Geflügelkörpers (4) fassend ausgebildet ist.

5. Vorrichtung nach einem der vorhergehenden Ansprüche 2 bis 4, **dadurch gekennzeichnet, dass** das Schneidmittel (38), der Dreharm (40) und der Rotationsantrieb (36) in der Weise zu dem Förderer (28) ausgerichtet sind, dass der Klemmhebel (48) und/oder die Kammspitze (22) des Brustbeins (6) des Geflügelkörpers (4) durch die Ausnehmung (42) führbar und/oder dass die Hauptschneide (44) beidseitig an der Kammspitze (22) und/oder an dem Klemmhebel (48) vorbeiführbar ist.

6. Vorrichtung nach einem der vorhergehenden Ansprüche 1 bis 5, **dadurch gekennzeichnet, dass** die Breite der Ausnehmung (42) größer als die größte Breite des Klemmhebels (48) und/oder der Kammspitze (22) des Brustbeins (6) ist.

7. Vorrichtung nach dem vorangehenden Anspruch 1 bis 6, **dadurch gekennzeichnet, dass** das Schneidmittel (38) in einem Winkel (a) zwischen 80 Grad und 135 Grad zu einer Längsachse E des Dreharms (40) angeordnet ist.

8. Vorrichtung nach einem der vorhergehenden Ansprüche 1 bis 7, **dadurch gekennzeichnet, dass** das Schneidmittel (38) einstückig ausgebildet ist.

9. Vorrichtung nach einem der vorhergehenden Ansprüche 1 bis 8, **dadurch gekennzeichnet, dass** an der tiefsten Kante (54) der Ausnehmung (42) eine zumindest im Wesentlichen parallel zur Hauptschneide (44) ausgerichtete Hilfsschneide (56) ausgebildet ist.

10. Vorrichtung nach einem der vorhergehenden Ansprüche 1 bis 9, **dadurch gekennzeichnet, dass** das Schneidmittel (38) ausgehend von der Hauptschneide (44) und sich in Richtung des Dreharms (40) erstreckend mindestens eine Führungsfläche (58) aufweist.

11. Vorrichtung nach dem vorangehenden Anspruch 10, **dadurch gekennzeichnet, dass** ein radialer Abstand der Hauptschneide (44) von der Drehachse (46) des Dreharms (40) größer ist als der radialer Abstand der Hilfsschneide (56) von der Drehachse (46) des Dreharms (40).

12. Verfahren zum automatischen Abtrennen des Gabelbeins (18) von entweideten Geflügelkörpern (4) mittels eines Schneidmittels (38), wobei jeder Geflügelkörper (4) von einer Haltevorrichtung (30) eines umlaufenden Förderers (28) gehalten wird, wobei der Förderer (28) die Haltevorrichtung (30) in einer Transportrichtung (T) entlang mindestens einer Bearbeitungsstation transportiert, mittels der das Gabelbein (18) von dem Geflügelkörper (4) getrennt wird, **dadurch gekennzeichnet, dass** ein mit einem Rotationsantrieb (36) verbundener Dreharm (40) das an dem Ende (52) des Dreharms (40) befestigte Schneidmittel (38) entlang einer Kurvenbahn (K) führt, wobei der Dreharm (40) und das Schneidmittel (38) eine zumindest im Wesentlichen L-förmige Anordnung bilden und das Schneidmittel (38) eine von einer Ausnehmung (42) unterbrochene Hauptschneide (44) aufweist, die zumindest im Wesentlichen parallel zu der Drehachse (46) des Dreharms (40) ausgerichtet ist und in den Geflügelkörper (4) eintaucht, und dass das Schneidmittel (38) danach das Gabelbein (18) in einer einzigen ununterbrochenen Schnittbewegung von dem Geflügelkörper (4) abtrennt.

13. Verfahren nach dem vorangehenden Anspruch 12, **dadurch gekennzeichnet, dass** die Hauptschneide (44) unterbrechende Ausnehmung (42) über die Kammspitze (22) des Brustbeins (6) des Geflügelkörpers (4) und/oder über einen Klemmhebel (48) der Haltevorrichtung (30) zum Fixieren des Geflügelkörpers (4) geführt wird, so dass die Kammspitze (22) und/oder der Klemmhebel (48) zumindest teilweise durch die Ausnehmung (42) hindurchtauchen.

14. Verfahren nach dem vorangehenden Anspruch 13, **dadurch gekennzeichnet, dass** die Hauptschneide (44) in der einzigen ununterbrochenen Schnittbewegung beidseitig an der Kammspitze (22) und/oder an dem Klemmhebel (48) vorbeigeführt wird.

15. Verfahren nach einem der vorhergehenden Ansprüche 12 bis 14, **dadurch gekennzeichnet, dass** das Schneidmittel (38) entlang der Kurvenbahn (K) geführt wird, die zwischen der Kammspitze (22) des Brustbeins (6) und dem gegenüber liegenden Ende (24) des Gabelbeins (18) und/oder durch den Verbindungsbereich (20) zwischen den Rabenbeinen (16) und den entsprechenden Enden (24) des Gabelbeins (18) führt.

16. Verfahren nach einem der vorhergehenden Ansprüche 12 bis 15, **dadurch gekennzeichnet, dass** eine Hilfsschneide (56) der Ausnehmung (42) den Geflügelkörper (4) zwischen der Kammspitze (22) des Brustbeins (6) und dem gegenüber liegenden Ende (24) des Gabelbeins (18) durchschneidet.

17. Verfahren nach einem der vorhergehenden Ansprüche 12 bis 16, **dadurch gekennzeichnet, dass** die Hauptschneide (44) den Verbindungsbereich zwischen den Rabenbeinen (16) und den entsprechenden Enden (24) des Gabelbeins (18) durchschneidet.

18. Verfahren nach einem der vorhergehenden Ansprüche 12 bis 17, **dadurch gekennzeichnet, dass** ein Einschnitt und eine Schnittgeschwindigkeit des Schneidmittels (38) zu der Transportgeschwindigkeit (T) des Förderers (28) synchronisiert werden.

## Claims

1. Apparatus for automatically separating the wishbone (18) from eviscerated poultry bodies (4), comprising a revolving conveyor (28) with at least one holding apparatus (30) with a support body (32) for receiving and holding the poultry bodies (4) during transport through the apparatus (26), and at least one processing station along a conveying line of the conveyor (28), wherein one of the processing stations is designed as a cutting unit (34) for separating the wishbone (18) from the poultry body (4), **characterized in that** the cutting unit (34) has a rotational drive (36), a cutting means (38) and a rotary arm (40) connecting the cutting means (38) and the rotational drive (36), said arm being designed to guide the cutting means (38) in the rotational direction (R) along a curved path (K), wherein the rotary arm (40) and the cutting means (38) form an at least essentially L-shaped arrangement and the cutting means (38) has a main cutting edge (44) interrupted by a recess (42) which is oriented at least essentially parallel to the rotational axis (46) of the rotary arm (40).

2. Apparatus according to the preceding claim, **characterized in that** the holding apparatus (30) has a clamping apparatus (50) with at least one clamping lever (48) moveable against the support body (32) to fixate the poultry body (4) on the support body (32).

3. Apparatus according to any one of the preceding claims, **characterized in that** the main cutting edge (44) is oriented horizontally and perpendicular with respect to a direction of transport (T) of the holding apparatus (30).

4. Apparatus according to any one of the preceding claims 2 or 3, **characterized in that** the clamping lever (48) is designed to grip in a clamping position in the area between the wishbone (18), the coracoid (16) and the breastbone (6) of the poultry body (4).

5. Apparatus according to any one of the preceding claims 2 to 4, **characterized in that** the cutting means (38), the rotary arm (40) and the rotational drive (36) are oriented with respect to the conveyor (28) in a manner that the clamping lever (48) and/or the tip of the carina (22) of the breastbone (6) of the poultry body (4) is guidable through the recess (42) and/or that the main cutting edge (44) is guidable past the tip of the carina (22) and/or the clamping lever (48) on both sides.

6. Apparatus according to any one of the preceding claims 1 to 5, **characterized in that** the width of the recess (42) is greater than the greatest width of the clamping lever (48) and/or the tip of the carina (22) of the breastbone (6).

7. Apparatus according to any one of the preceding claims 1 to 6, **characterized in that** the cutting means (38) is arranged at an angle (α) between 80 degrees and 135 degrees with respect to a longitudinal axis E of the rotary arm (40).

8. Apparatus according to any one of the preceding claims 1 to 7, **characterized in that** the cutting means (38) is constructed in one piece.

9. Apparatus according to any one of the preceding claims 1 to 8, **characterized in that** an auxiliary cutting means (56) is designed on the lowest edge (54) of the recess (42) and oriented at least essentially parallel to the main cutting edge (44).

10. Apparatus according to any one of the preceding claims 1 to 9, **characterized in that** the cutting means (38) has at least one guiding surface (58) starting from the main cutting edge (44) and extending in the direction of the rotary arm (40).

11. Apparatus according to the preceding claim 10, **characterized in that** a radial distance of the main cutting edge (44) from the rotational axis (46) of the rotary arm (40) is greater than the radial distance of the auxiliary cutting means (56) from the rotational axis (46) of the rotary arm (40).

12. Method for automatically separating the wishbone (18) from eviscerated poultry bodies (4) using a cutting means (38), wherein each poultry body (4) is held by a holding apparatus (30) of a revolving conveyor (28), wherein the conveyor (28) transports the holding apparatus (30) in a direction of transport (T) along at least one processing station, by means of which the wishbone (18) is separated from the poultry body (4), **characterized in that** a rotary arm (40) associated with a rotational drive (36) guides a cutting means (38) attached at the end (52) of the rotary arm (40) along a curved path (K), wherein the rotary arm (40) and the cutting means (38) form an at least essentially L-shaped arrangement and the cutting means (38) has a main cutting edge (44) interrupted by a recess (42), which is oriented at least essentially parallel to the rotational axis (46) of the rotary arm (40) and plunges into the poultry body (4), and that the cutting means (38) then separates the wishbone (18) from the poultry body (4) in a single uninterrupted cutting movement.

13. Method according to the preceding claim 12, **characterized in that** a recess (42) interrupting the main cutting edge (44) is guided over the tip of the carina (22) of the breastbone (6) of the poultry body (4) and/or over a clamping lever (48) of the holding apparatus (30) for fixating the poultry body (4) such that the tip of the carina (22) and/or the clamping lever (48) passes at least in part through the recess (42).

14. Method according to the preceding claim 13, **characterized in that** the main cutting edge (44) is guided past the tip of the carina (22) and/or the clamping lever (48) on both sides in a single uninterrupted cutting movement.

15. Method according to any one of the preceding claims 12 to 14, **characterized in that** the cutting means (38) is guided along a curved path (K) leading between the tip of the carina (22) of the breastbone (6) and the opposing end (24) of the wishbone (18) and/or through the connecting area (20) between the coracoids (16) and the corresponding ends (24) of the wishbone (18).

16. Method according to any one of the preceding claims 12 to 15, **characterized in that** an auxiliary cutting means (56) of the recess (42) cuts through the poultry body (4) between the tip of the carina (22) of the breastbone (6) and the opposing end (24) of the wishbone (18).

17. Method according to any one of the preceding claims 12 to 16, **characterized in that** the main cutting edge (44) cuts through the connecting area between the coracoids (16) and the corresponding ends (24) of the wishbone (18).

18. Method according to any one of the preceding claims 12 to 17, **characterized in that** an incision and/or a cutting speed of the cutting means (38) are synchronized with the transport speed (T) of the conveyor (28).

## Revendications

1. Dispositif destiné à séparer automatiquement la clavicule (18) de corps de volailles éviscérés (4), comprenant un convoyeur circulaire (28) avec au moins un dispositif de maintien (30) avec un corps d'appui (32) destiné à recevoir et à maintenir les corps de volailles (4) pendant le transport par le dispositif (26), ainsi qu'au moins une station de traitement le long d'un parcours de convoyage du convoyeur (28), dans lequel une des stations de traitement est conçue comme unité de coupe (34) destinée à séparer la clavicule (18) du corps de volaille (4), **caractérisé en ce que** l'unité de coupe (34) présente un entraînement en rotation (36), un moyen de coupe (38) et un bras rotatif (40) reliant le moyen de coupe (38) et l'entraînement en rotation (36), qui est configuré pour guider le moyen de coupe (38) dans une direction de rotation (R) le long d'un trajet courbe (K), dans lequel le bras rotatif (40) et le moyen de coupe (38) forment un agencement au moins sensiblement en forme de L et le moyen de coupe (38) présente un tranchant principal (44) interrompu par un évidement (42), qui est orienté sensiblement parallèlement à l'axe de rotation (46) du bras rotatif (40).

2. Dispositif selon la revendication précédente, **caractérisé en ce que** le dispositif de maintien (30) présente un dispositif de serrage (50) avec au moins un levier de serrage (48) déplaçable contre le corps d'appui (32) pour fixer le corps de volaille (4) sur le corps d'appui (32).

3. Dispositif selon l'une quelconque des revendications précédentes, **caractérisé en ce que** le tranchant principal (44) est orienté horizontalement et verticalement à une direction de transport (T) du dispositif de maintien (30).

4. Dispositif selon l'une quelconque des revendications précédentes 2 ou 3, **caractérisé en ce que** le levier de serrage (48) est conçu de manière à saisir dans une position de serrage dans la zone entre la clavicule (18), la coracoïde (16) et le sternum (6) du corps de volaille (4).

5. Dispositif selon l'une quelconque des revendications précédentes 2 à 4, **caractérisé en ce que** le moyen de coupe (38), le bras rotatif (40) et l'entraînement en rotation (36) sont orientés par rapport au convoyeur (28) de sorte que le levier de serrage (48) et/ou la pointe de bréchet (22) du sternum (6) du corps de volaille (4) peuvent être guidés à travers l'évidement (42) et/ou que le tranchant principal (44) peut être guidé en passant des deux côtés de la pointe de bréchet (22) et/ou du levier de serrage (48).

6. Dispositif selon l'une quelconque des revendications précédentes 1 à 5, **caractérisé en ce que** la largeur de l'évidement (42) est plus grande que la plus grande largeur du levier de serrage (48) et/ou de la pointe de bréchet (22) du sternum (6).

7. Dispositif selon l'une quelconque des revendications précédentes 1 à 6, **caractérisé en ce que** le moyen de coupe (38) est agencé sous un angle (a) entre 80 degrés et 135 degrés par rapport à un axe longitudinal E du bras rotatif (40).

8. Dispositif selon l'une quelconque des revendications 1 à 7, **caractérisé en ce que** le moyen de coupe (38) est conçu d'un seul tenant.

9. Dispositif selon l'une quelconque des revendications précédentes 1 à 8, **caractérisé en ce qu'**un tranchant auxiliaire (56) orienté au moins sensiblement parallèlement au tranchant principal (44) est conçu au niveau du bord le plus bas (54) de l'évidement (42).

10. Dispositif selon l'une quelconque des revendications précédentes 1 à 9, **caractérisé en ce que** le moyen de coupe (38) présente au moins une surface de guidage (58) partant du tranchant principal (44) et s'étendant en direction du bras rotatif (40).

11. Dispositif selon la revendication précédente 10, **caractérisé en ce qu'**une distance radiale entre le tranchant principal (44) et l'axe de rotation (46) du bras rotatif (40) est plus grande que la distance radiale entre le tranchant auxiliaire (56) et l'axe de rotation (46) du bras rotatif (40).

12. Procédé destiné à séparer automatiquement la clavicule (18) de corps de volailles éviscérés (4) à l'aide d'un moyen de coupe (38), dans lequel chaque corps de volaille (4) est maintenu par un dispositif de maintien (30) d'un convoyeur circulaire (28), dans lequel le convoyeur (28) transporte le dispositif de maintien (30) dans une direction de transport (T) le long d'au moins une station de traitement au moyen de laquelle la clavicule (18) est séparée du corps de volaille (4), **caractérisé en ce qu'**un bras rotatif (40), relié à un entraînement en rotation (36), guide le moyen de coupe (38) fixé à l'extrémité (52) du bras rotatif (40) le long d'un trajet courbe (K), dans lequel le bras rotatif (40) et le moyen de coupe (38) forment un agencement au moins sensiblement en forme de L et le moyen de coupe (38) présente un tranchant principal (44) interrompu par un évidement (42), qui est orienté au moins sensiblement parallèlement à l'axe de rotation (46) du bras rotatif (40) et qui plonge dans le corps de volaille (4), et **en ce que** le moyen de coupe (38) sépare ensuite la clavicule (18) du corps de volaille (4) dans un unique déplacement de coupe ininterrompu.

13. Procédé selon la revendication précédente 12, **caractérisé en ce que** l'évidement (42) interrompant le tranchant principal (44) est guidé au-dessus de la pointe de bréchet (22) du sternum (6) du corps de volaille (4) et/ou du levier de serrage (48) du dispositif de maintien (30) destiné à fixer le corps de volaille (4) de sorte que la pointe de bréchet (22) et/ou le levier de serrage (48) plongent au moins en partie à travers l'évidement (42).

14. Procédé selon la revendication précédente 13, **caractérisé en ce que** le tranchant principal (44), dans l'unique déplacement de coupe ininterrompu, est guidé en passant des deux côtés de la pointe de bréchet (22) et/ou du levier de serrage (48).

15. Procédé selon l'une quelconque des revendications précédentes 12 à 14, **caractérisé en ce que** le moyen de coupe (38) est guidé le long du trajet courbe (K) qui mène entre la pointe de bréchet (22) du sternum (6) et l'extrémité opposée (24) de la clavicule (18) et/ou à travers la zone de liaison (20) entre les coracoïdes (16) et les extrémités correspondantes (24) de la clavicule (18).

16. Procédé selon l'une quelconque des revendications précédentes 12 à 15, **caractérisé en ce qu'**un tranchant auxiliaire (56) de l'évidement (42) coupe à travers le corps de volaille (4) entre la pointe de bréchet (22) du sternum (6) et l'extrémité opposée (24) de la clavicule (18).

17. Procédé selon l'une quelconque des revendications précédentes 12 à 16, **caractérisé en ce que** le tranchant principal (44) coupe à travers la zone de liaison entre les coracoïdes (16) et les extrémités correspondantes (24) de la clavicule (18).

18. Procédé selon l'une quelconque des revendications précédentes 12 à 17, **caractérisé en ce qu'**une profondeur de coupe et une vitesse de coupe du moyen de coupe (38) sont synchronisées avec la vitesse de transport (T) du convoyeur (28).
